## Europäisches Patentamt
## European Patent Office
## Office européen des brevets

(19)

(11) Veröffentlichungsnummer : **0 117 594**
**B1**

(12) **EUROPÄISCHE PATENTSCHRIFT**

(45) Veröffentlichungstag der Patentschrift :
**11.10.89**

(51) Int. Cl.⁴ : **B 29 D 11/00**, G 02 B   6/02,
B 29 C 71/02

(21) Anmeldenummer : **84200249.5**

(22) Anmeldetag : **22.02.84**

(54) **Verfahren zur Herstellung einer Wellenleiterader und Vorrichtung zur Durchführung des Verfahrens.**

(30) Priorität : **25.02.83 DE 3306603**
**17.03.83 DE 3309573**

(43) Veröffentlichungstag der Anmeldung :
**05.09.84 Patentblatt 84/36**

(45) Bekanntmachung des Hinweises auf die Patenterteilung : **11.10.89 Patentblatt 89/41**

(84) Benannte Vertragsstaaten :
**DE FR GB IT NL SE**

(56) Entgegenhaltungen :
**DE—A— 2 757 786**
**DE—A— 3 111 963**
**GB—A— 2 017 335**
**US—A— 4 127 370**
**US—A— 4 154 783**

(73) Patentinhaber : **Philips Patentverwaltung GmbH**
**Wendenstrasse 35 Postfach 10 51 49**
**D-2000 Hamburg 1 (DE)**
**DE**
**N.V. Philips' Gloeilampenfabrieken**
**Groenewoudseweg 1**
**NL-5621 BA Eindhoven (NL)**
**FR GB IT NL SE**

(72) Erfinder : **Becker, Johann Arnold, Dr.**
**Zöllnerstrasse 64**
**D-5083 Overath (DE)**
Erfinder : **Zell, Werner, Dr.**
**Gleiwitzer Strasse 15**
**D-5000 Köln 80 (DE)**

(74) Vertreter : **Meier, Friedrich, Dipl.-Ing. et al**
**Philips Patentverwaltung GmbH Wendenstrasse 35**
**Postfach 10 51 49**
**D-2000 Hamburg 1 (DE)**

EP 0 117 594 B1

## Beschreibung

Die Erfindung bezieht sich auf ein Verfahren zur Herstellung einer Wellenleiterader, wobei eine Hülle aus Kunststoff bei erhöhter Temperatur um eine oder mehrere Wellenleiterfaser(n) gespritzt (extrudiert) und danach mittels einer die Wellenleiterader und die Wellenleiterfaser(n) an ihrem Umfang mitnehmenden Trommel durch eine temperaturgeregelte Kühlstation abgezogen wird.

Ein derartiges Verfahren ist bereits aus der DE-A 31 11 963 bekannt. Es dient zur Herstellung von Wellenleiteradern, bei denen die Wellenleiterfaser relativ zur Hülle eine Überlänge besitzt, so daß die Faser in der Hülle z. B. einen wellenförmigen Verlauf aufweist. Bei dem Verfahren wird zunächst die Wellenleiterader bei einer bestimmten Temperatur über Raumtemperatur aufgewickelt, wobei sich die Wellenleiterfaser infolge von zusätzlicher Bremsung auf den Kleinsten Krümmungsradius innerhalb der Hülle legt, so daß die Wellenleiterfaser relativ zur Hülle in einer vorgewählten Anfangsposition liegt. Es wird somit zunächst eine Wellenleiterader erzeugt, bei der die Faser relativ zur Hülle eine gewisse Unterlänge besitzt, d. h. die Faser würde beim Lösen der Aderenden in die Hülle hineinlaufen.

Durch das Abkühlen auf eine konstante Umgebungstemperatur der so aufgewickelten Ader wird erreicht, daß sie sich vor dem weiteren Abkühlen auf Raumtemperatur in einem definierten physikalischen Zustand befindet, so daß die danach eintretende thermische Längenkontraktion der Hülle bei der Abkühlung kalkulierbar bleibt. Es is somit möglich, die Relativlänge der Hülle zur Wellenleiterfaser genau zu bestimmen. Beispielsweise kann hierdurch die zuvor eingestellte Unterlänge kompensiert oder sogar überkompensiert werden, so daß Wellenleiteradern entstehen, deren Fasern eine Überlänge aufweisen.

Wenn bei diesen Wellenleiteradern zur Einstellung der Überlänge die reversible thermische Kontraktion bei stetig bis zur Umgebungstemperatur erfolgender Abkühlung der Hülle auf Raumtemperatur ausgenutzt wird, lassen sich definierte Überlängen nicht genau genug erreichen, insbesondere dann nicht, wenn auf die Wellenleiteradern nach ihrer Herstellung relativ hohe Temperaturen, z. B. bei weiteren Verarbeitungsschritten oder infolge intensiver Sonneneinstrahlung bei Lagerung im Freien, einwirken. Derartige Adern weisen je nach Temperatureinwirkung eine gegenüber der zuvor eingestellten Überlänge veränderte, sich auch bei Temperaturerniedrigung nicht wieder abbauende Überlänge ihrer Wellenleiterfasern auf, so daß sich ihre optischen Übertragungseigenschaften in unkontrollierter Weise ändern.

Ähnliche Probleme entstehen bei einem durch die GB-A 20 17 335 bekannten Verfahren der eingangs genannten Art, mit welchem fest umhüllte Wellenleiterfasern hergestellt werden sollen. Bei der Herstellung und insbesondere durch nach der Herstellung einwirkende hohe Temperaturen können Längsspannungen zwischen der Hülle und den Wellenleiterfasern entstehen.

Aufgabe der Erfindung ist es, ein Verfahren zur Herstellung einer Wellenleiterader mit einer in einer Hülle angeordneten Wellenleiterfaser anzugeben, bei welchem die Länge der Hülle so eingestellt wird, daß sie auch nach Einwirkung relativ hoher Temperaturen nach Fertigstellung der Wellenleiterader erhalten bleibt.

Diese Aufgabe wird gemäß der Erfindung mit einem Verfahren der eingangs genannten Art dadurch gelöst, daß die abgezogene Wellenleiterader erneut aufgeheizt, bei der Aufheiztemperatur getempert und schließlich auf Raumtemperatur abgekühlt wird.

Das erfinderische Verfahren basiert auf Untersuchungen an kontraktionsfähigen Wellenleiterhüllen, die gezeigt haben, daß dem reversiblen Prozeß der thermischen Expansion und Kontraktion ein irreversibler Kontraktionsvorgang überlagert ist, der im folgenden als Schrumpfvorgang bezeichnet werden soll. Dieser Schrumpfvorgang ist dabei als eine im Laufe der Zeit eintretende irreversible Volumen- bzw. Längenänderung zu verstehen. Durch das erfinderische Verfahren wird der Ablauf des Schrumpfvorganges im Sinne einer Alterung stark beschleunigt.

Das erfindungsgemäße Verfahren kann bei der Herstellung einer Wellenleiterader angewendet werden, bei der die Kunststoffhülle an der Wellenleiterfaser anliegt. Dies hat den Vorteil, daß über die Zeit kein unkontrollierter Schrumpfvorgang mehr stattfindet, so daß die Faser keiner unkontrollierten Zugbelastung unterworfen wird. Besonders vorteilhaft ist es, das erfindungsgemäße Verfahren bei der Einstellung der Überlängen von Wellenleiterfasern in Wellenleiteradern einzusetzen.

Es ist vorteilhaft, um die Wellenleiterfaser(n) eine lose Hülle aus Kunststoff bei erhöhter Temperatur zu spritzen, die Ader zu kühlen und aufzuwickeln, wobei eine vorgewählte Anfangsposition der Wellenleiterfaser(n) relativ zur Hülle eingestellt wird, die aufgewickelte Wellenleiterader aufzuheizen, bei der Aufheiztemperatur zu tempern und schließlich die Ader abzukühlen, wobei als Folge des auftretenden Schrumpfvorganges eine genaue Überlänge der Wellenleiterfaser(n) innerhalb der Hülle erreicht wird.

Nach der Einstellung einer bestimmten Anfangsposition von Wellenleiterfaser und Hülle, z. B. nach Einstellung einer Unterlänge der Faser relativ zu Hülle, wird die Hülle solange geschrumpft, bis sich die gewünschte Überlänge eingestellt hat. Die Größe der erzeugten Überlänge hängt dabei, wie weiter unten noch genauer erläutert wird, von mehreren Parametern ab, wie z. B. von der Temperzeit, der Abkühlgeschwindigkeit der gerade auf die Faser aufgebrachten Hülle, der Anfangsposition zwischen Faser und Hülle, etc.

Das erfindungsgemäße Verfahren hat den Vorteil, daß nach Abschluß des Schrumpfprozesses praktisch keine großen irreversiblen Längenänderungen der Hülle infolge erneuter hoher Temperatureinwirkungen und damit bleibende bzw. unkontrollierte Änderungen der eingestellten Überlänge mehr eintreten, wie Versuche mit den verschiedensten Hüllenmaterialien gezeigt haben.

Nach einer vorteilhaften Weiterbildung der Erfindung liegt die Aufheiztemperatur knapp unterhalb der Erweichungstemperatur des Kunststoffes. Kunststoffe haben ein relativ starkes Schrumpfverhalten, so daß relativ große Überlängen einstellbar sind. Die Wahl einer Heiztemperatur knapp unterhalb der Erweichungstemperatur des Kunststoffes bewirkt, daß der Schrumpfvorgang auch möglichst vollständig abläuft, so daß die einmal eingestellten Überlängen keinen Änderungen mehr unterliegen.

Nach einer anderen vorteilhaften Ausbildung der Erfindung wird zur Einstellung der Anfangsposition der Wellenleiterfaser innerhalb der Hülle die Reibung zwischen Wellenleiterfaser und Hülle so groß gewählt, daß die Wellenleiterfaser ohne Unterlänge aufgewickelt wird. Das bedeutet, daß die Faser praktisch im Zentrum der Hülle verläuft, wodurch ihre relative Lage zur Hülle festgelegt ist. Eine derartige definierte Anfangsposition zwischen Faser und Hülle ist erfolderlich, um über das bekannte Schrumpfverhalten der Hülle, das z. B. vorher gemessen wurde, auch die gewünschte Überlänge einstellen zu können.

Nach einer weiteren Ausbildung der Erfindung wird zur Einstellung der Anfangsposition die Reibung zwischen Wellenleiterfaser und Hülle klein gewählt, wobei sich die Wellenleiterfaser infolge ihrer Bremsung beim Aufwickeln der Wellenleiterader auf den kleinsten Krümmungsradius in der Hülle legt. Zur Einstellung der Anfangsposition kann die Wellenleiterfaser während des Aufwickelns auch gedehnt werden. Beide Methoden haben den Vorteil, daß der Variationsbereich zur Einstellung der Überlänge durch vorherige Erzeugung Unterlänge erheblich erweitert werden kann.

Bei einer anderen vorteilhaften Weiterbildung der Erfindung wird nach Extrusion der Hülle die Wellenleiterader mit nur geringer Abkülgeschwindigkeit abgekühlt.

Es hat sich nämlich gezeigt, daß der Schrumpfvorgang zu einem Teil schon während des Extrudierens der Hülle einsetzt. Dieser Extrusionsschrumpf ist dabei umso größer, je geringer die Abkühlungsgeschwindigkeit der Wellenleiterader nach dem Extrudieren ist. Durch ein langsames Abkühlen der Wellenleiterader wird somit erreicht, daß beim anschließenden Tempern nur noch ein relativ kleiner Schrumpf der Hülle und damit nur noch eine geringe Längenänderung der Wellenleiterader eintritt, was die Weiterbehandlung der Wellenleiterader nach dem Extrudieren erleichtert. Darüber hinaus erhält man durch die Variation der Abkühlgeschwindigkeit einen weiteren Parameter zur Einstellung des Gesamtschrumpfes.

Zur Aufheizung und Temperung kann die Wellenleiterader in einem auf die Aufheiztemperatur gebrachten Heizraum eingeführt werden, wodurch reproduzierbare Schrumpfergebnisse erreicht werden.

Die eingestellte Temperzeit liegt vorzugsweise im Stundenbereich, was zum vollständigen Abschluß aller Schrumpfprozesse führt.

Eine sehr vorteilhafte Weiterbildung des erfindungsgemäßen Verfahrens ist dadurch gekennzeichnet, daß die Wellenleiterader auf eine sich in axialer Richtung durch einen Heizraum hindurchbewegende Trommel aufgewickelt wird.

Dabei wird die Wellenleiterader auf die Heiztemperatur aufgeheizt und getempert.

In dieser bevorzugten Ausführungsform ist ein ununterbrochener, also kontinuierlicher Verfahrensablauf erzielt worden.

Wie Untersuchungen gezeigt haben, reicht eine lokale Aufheizung der Wellenleiterader während eines üblichen Extrusionsprozesses zur möglichst vollständigen Schrumpfung der Hülle im allgemeinen nicht aus, da bei den gängigen Fertigungsgeschwindigkeiten, die typischerweise im Bereich von einigen Metern pro Minute liegen, die zur Aufheizung und Temperung zur Verfügung stehende Zeit zu gering ist.

Durch das letztgenannte bevorzugte Verfahren nach der Erfindung wird jedoch erreicht, daß die zur Aufheizung und Temperung lokaler Wellenleiterader-Bereiche zur Verfügung stehende Zeit auch bei üblichen Extrusions- bzw. Fertigungsgeschwindigkeiten erheblich verlängert werden kann. Dies geschieht dadurch, daß die Geschwindigkeit der Wellenleiterader nach Verlassen des Kühlbades mit Hilfe der Trommel, auf die sie aufgewickelt wird, untersetzt bzw. verringert wird. Die Trommel bewegt sich dazu in Richtung der Trommelachse, wobei sie einen Heizraum durchläuft, dessen Länge so gewählt ist, daß bei vorgegebener Fertigungsgeschwindigkeit, Trommel- und Aderabmessung die zur möglichst vollständigen Schrumpfung . erforderliche Aufheiz- und Temperzeit erreicht wird. Da der Schrumpfvorgang beim anschließenden Abkühlen der Wellenleiterader auf der Trommel selbst erfolgt, ist diese vorzugsweise in ihrem Radius nachgiebig ausgebildet, damit genügend Raum für die Kontraktion der Hülle vorhanden ist und eine vollständige Schrumpfung erreicht werden kann. Zweckmäßig bewegt sich die Trommel in ihrer Längsrichtung kontinuierlich, so daß eine Lage von gleichmäßig nebeneinander liegender Wellenleiterader-Windungen erzeugt wird.

Ausgehend von der GB-A- 2017335, betrifft die Erfindung außerdem eine Vorrichtung zur Durchführung des bevorzugten Verfahrens mit einem ununterbrochenen Verfahrensablauf, mit mindestens einer Vorratsspule für eine Wellenleiterfaser, einem Extruder zur Umhüllung der Faser(n) mit einer Hülle aus Kunststoff, einem Kühlbad zur Abkühlung der umhüllten Wellenleiterfaser(n), einem Heizraum sowie mit einer Trommel zur Aufwicklung der Wellenleiterader. Bei dieser ist erfindugsgemäß vorgesehen, daß die Trommel in der Richtung ihrer Trommelachse verschiebbar angeordnet und durch den Heizraum axial bewegbar ist.

Die Erfindung wird nachfolgend anhand der Zeichnung näher erläutert. Es zeigen :

Fig. 1 eine schematisch dargestellte Vorrichtung zur Herstellung von Wellenleiteradern mit definierter Überlänge in einem ununterbrochenen Fertigungsablauf,

Fig. 2 eine auf einer Trommel aufgewickelte Lage der Wellenleiterader und

Fig. 3 mehrere Lagen einer Wellenleiterader auf einer Trommel.

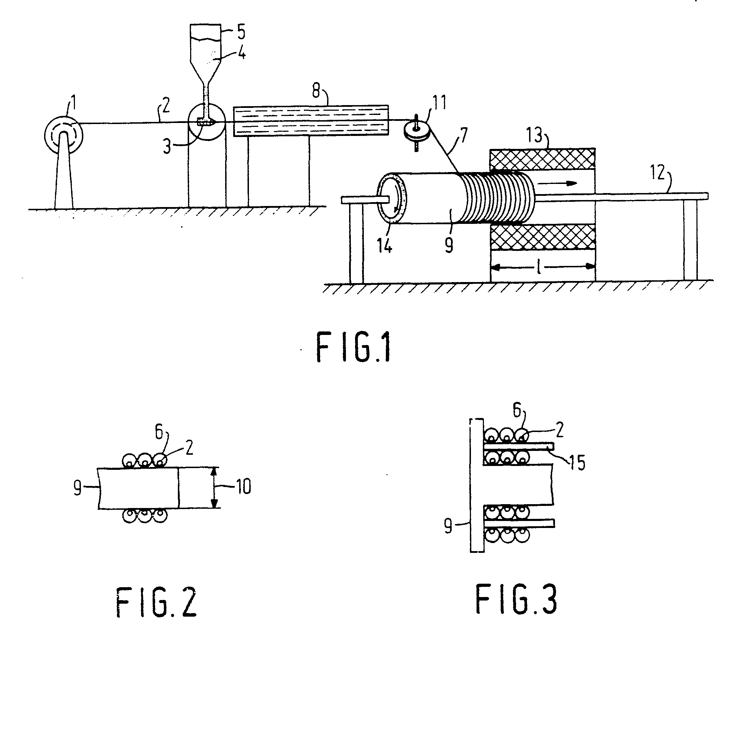

In Fig. 1 ist eine Vorrichtung zur Herstellung kunststoffumhüllter Wellenleiterfasern für die Übertragung optischer Signale gezeigt. Diese Vorrichtung besitzt eine Vorratsspule 1, auf der die zu umhüllende Wellenleiterfaser 2 aufgewickelt ist. Die Wellenleiterfasser 2 wird durch einen Extruder 3 geführt, welcher von einem mit Kunststoffgranulat 4 gefüllten Behälter 5 gespeist wird, und der die Wellenleiterfaser 2 mit einer Kunstostoffhülle 6 (siehe Fig. 2) versieht, in der sich die Wellenleiterfaser 2 wenigstens in gewissem Umfang bewegen kann. Selbstverständlich können sich auch mehrere Wellenleiterfasern 2 in der Kunststoffhülle 6 befinden. Der Kunststoff zur Erzeugung der Hülle 6 ist z. B. ein teilkristalliner Thermoplast, wie etwa Polypropylen, Polyäthylen, Polyurethan, Polyvinylidenfluorid, oder ein amorpher Kunststoff, wie etwa PVC. Die aus Wellenleiterfaser 2 und Kunststoffhülle 6 bestehende Wellenleiterader 7, die gegebenenfalls in ihrem Innern noch ein Gel, z. B. zur Verbesserung ihrer optischen Eigenschaften, aufweisen kann, wird dann einer Kühlstation 8 zur langsamen Abkühlung zugeführt. Die Kühlstation 8 kann z. B. ein temperaturgeregeltes und in seiner Länge variables Wasserbad sein.

Anschließed wird die Wellenleiterader 7, z. B. über eine Umlenkrolle 11, auf eine (Vorrats-) Trommel 9 aufgewickelt, die sich zusätzlich in Richtung der Trommelachse 12 kontinuierlich bewegt. Die Trommel 9 durchläuft dabei einen Heizofen 13 mit nur geringer Geschwindigkeit, so daß die auf der Trommel 9 aufgewickelte Wellenleiterader 7 getempert werden kann.

Bei der Aufwicklung der Wellenleiterader 7 auf die Trommel 9 wird z. B. zunächst die Bremskraft an der Wellenleiterfaser 2 so hoch gewählt, daß die innere Reibung zwischen der Wellenleiterfaser 2 und der Hülle 6 auf der gesamten Länge zwischen dem Extruder 3 und der Trommel 9 überwunden wird, so daß die Wellenleiterfaser 2 beim Aufwickeln der Wellenleiterader 7 an der Innenwand der Hülle 6 anliegt, was in Fig. 2 veranschaulicht ist. Auf diese Weise erhält die Wellenleiterfaser 2 gegenüber der Hülle 6 eine Unterlänge, die u. a. auch vom Durchmesser 10 der Trommel 9 mitbestimmt wird und Werte bis zu einem Prozent annehmen kann. Es wird somit eine bestimmte Anfangsposition zwischen Wellenleiterfaser 2 und Hülle 6 festgelegt, die unerläßlich ist für die Erzeugung einer Wellenleiterader 7, relativ zu der die Wellenleiterfaser 2 eine definierte und reproduzierbare Überlänge besitzt.

Der Schrumpfprozeß der Hülle 6 zur Einstellung einer gewünschten Überlänge der Wellenleiterfaser 2 relativ zur Hülle 6 wird dann danach durch die Temperung der Wellenleiterader 7 im Heizofen 13 eingeleitet. Der Ofen hat eine Heiztemperatur knapp unterhalb der Erweichungstemperatur des Kunststoffes. Mit Hilfe der Trommel 9 wird die Translationsbewegung der von der ablaufenden Wellenleiterfaser 2 in eine solche mit erheblich niedrigerer Geschwindigkeit V2 umgesetzt.

Beispielsweise ergibt sich bei einer Extrusionsgeschwindigkeit V1 von 10 m/min, einem äußeren Durchmesser der Hülle 6 von 1,5 mm und einem Trommeldurchmesser von 30 cm für die Trommel 9 eine Drehzahl von 10 Umdrehungen pro Minute, während sich für die Geschwindigkeit V2 der Trommel 9 in Richtung der Trommelachse 9a ein Wert von mindestens 15 mm/min ergibt. Für eine Temperzeit von sechs Studen wäre also eine beheizte Zone 1 des Heizofens 13 mit einer Länge von 5,40 m erforderlich, wobei die Trommel 9 natürlich länger sein kann. Die Translationsgeschwindigkeit V1 ist somit im Verhältnis 1 : 666 herabgesetzt worden. Selbst bei erheblich höheren Extrusionsgeschwindigkeiten V1 können somit noch Temperzeiten realisiert werden, durch die eine relativ vollständige Schrumpfung des Hüllenmaterials erzielt werden kann. Typische Extrusionsgeschwindigkeiten V1 können somit auf ein Verhältnis 1 : 100 bis ca. 1 : 1000 herabgesetzt werden.

Damit der durch die Temperung eingeleitete Schrumpfprozeß auch vollständig ablaufen kann, ist vorzugsweise die Trommel 9 an der Außenseite mit einer Schicht 14 eines zusammendrückbaren Materials, wie Schaumstoff, versehen, so daß genügend Raum bei einer Verkürzung der Wellenleiterader 7 auf der Trommel 9 infolge der Hüllenkontraktion bleibt.

In einer weiteren bevorzugten Ausbildung, dargestellt in Fig. 3, liegen zwischen den einzelnen Lagen der Wellenleiterader 7 weitere Schichten 15 aus zusammendrückbarem Material, z. B. Schaumstoffschichten, so daß die Hülle 6 der unteren Wellenleiterader 7 in gleicher Weise wie die weiter oben liegende Hülle schrumpfen kann.

Nach dem Tempervorgang wird die Wellenleiterader 7 auf die Raumtemperatur heruntergekühlt z. B. dadurch, daß die Trommel 9 dem Heizraum entnommen wird. Durch die dann erfolgende irreversible Verkürzung der Hülle 6 wird die vorher eingestellte Unterlänge kompensiert bzw. überkompensiert, so daß sich eine Überlänge der Wellenleiterfaser 2 einstellt. Durch die Temperung in der Nähe der Erweichungstemperatur des jeweiligen Kunststoffes wird erreicht, daß bei späteren Temperaturbeanspruchungen, z. B. beim Aufbringen einer Mantelkonstruktion, keine weitere irreversible Längenänderung der Kunststoffhüle 6 mehr erfolgen kann, so daß der z. B. für ein Kabel erwünschte Wert der Überlänge hierdurch reproduzierbar eingestellt werden kann. Große Überlängen sind beispielsweise für dehnbare Kabelseelen in Luftkabeln erforderlich. Die Heiztemperatur kann allerdings auch geringer als die knapp unterhalb der Erweichungstemperatur des Kunststoffes liegende sein.

In diesem Fall muß dann aber sichergestellt sein, daß die Wellenleiterader später nicht wieder über diese Temperatur hinaus aufgeheizt wird. In jedem Fall muß die Heiztemperatur aber so hoch liegen, daß durch das Tempern ein irreversibler Schrumpfprozeß der Hülle 6 eingeleitet wird.

Mit dem beschriebenen Verfahren bzw. der Vorrichtung lassen sich danach, insbesondere auch bei höheren Fertigungsgeschwindigkeiten V1, die gewünschten Überlängenwerte, auch relativ große von ca. 1% für besonders dehnbare Kabelseelen in Luftkabeln, in einem kontinuierlichen Arbeitsablauf, d. h. ohne Verfahrensunterbrechung, herstellen.

Natürlich ist es auch möglich, mehrere auf diese Weise hergestellte Wellenleiteradern 7 zu verseilen und mit einer gemeinsamen Kabelumhüllung zu versehen.

## Patentansprüche

1. Verfahren zur Herstellung einer Wellenleiterader (7), wobei eine Hülle (6) aus Kunststoff bei erhöhter Temperatur um eine oder mehrere Wellenleiterfaser(n) (2) gespritzt (extrudiert) und danach mittels einer die Wellenleiterader (7) und die Wellenleiterfaser(n) an ihrem Umfang mitnehmenden Trommel (9) durch eine Temperaturgeregelte Kühlstation (8) abgezogen wird, dadurch gekennzeichnet, daß die abgezogene Wellenleiterader (7) erneut aufgeheizt, bei der Aufheiztemperatur getempert und schließlich auf Raumtemperatur abgekühlt wird.

2. Verfahren nach Anspruch 1, dadurch gekennzeichnet, daß eine lose Hülle (6) aus Kunststoff bei erhöhter Temperatur um die Faser(n) (2) gespritzt wird, die Ader (7) abgekühlt und aufgewickelt wird, wobei eine vorgewählte Anfangsposition der Wellenleiterfaser(n) (2) relativ zur Hülle (6) eingestellt wird, dann die aufgewickelte Wellenleiterader (7) aufgeheizt und bei der Aufheiztemperatur getempert wird und schließlich die Ader (7) so abgekühlt wird, daß als Folge des auftretenden Schrumpfvorganges eine genaue Überlänge der Wellenleiterfaser(n) (2) innerhalb der Hülle (6) erreicht wird.

3. Verfahren nach Anspruch 1 oder 2, dadurch gekennzeichnet, daß die Aufheiztemperatur knapp unterhalb der Erweichungstemperatur des Kunststoffes liegt.

4. Verfahren nach Anspruch 1, 2 oder 3, dadurch gekennzeichnet, daß die Wellenleiterader (7) auf eine in axialer Richtung durch einen Heizraum (13) hindurchbewegte Trommel (9) aufgewickelt wird.

5. Vorrichtung zur Durchführung des Verfahrens nach Anspruch 4 mit mindestens einer Vorratsspule (1) für eine Wellenleiterfaser (2), einem Extruder (3) zur Umhüllung der Faser (2) mit einer Hülle (6) aus Kunststoff, einem Kühlbad (8) zur Abkühlung der umhüllten Wellenleiterfaser (3), einem Heizraum (13) sowie mit einer Trommel (9) zur Aufwicklung der Wellenleiterader (7), dadurch gekennzeichnet, daß die Trommel (9) in der Richtung ihrer Trommelachse (12) verschiebbar angeordnet und durch den Heizraum (13) axial bewegbar ist.

6. Vorrichtung nach Anspruch 5, dadurch gekennzeichnet, daß die Trommel (9) auf ihrem Umfang mit einer Schicht (14) eines zusammendrückbaren Materials versehen ist.

7. Vorrichtung nach Anspruch 5 oder 6, dadurch gekennzeichnet, daß zwischen den einzelnen Lagen der auf die Trommel (9) gewickelten Wellenleiterader (7) Schichten (15) aus zusammendrückbarem Material vorgesehen sind.

## Claims

1. A method of manufacturing a waveguide element (7), in which a synthetic resin enveloppe (6) is moulded (extruded) around one or more optical fibres (2) at elevated temperature, and subsequently detached therefrom using a drum (9) which engages at the circumference of the waveguide element (7) and the optical fibre(s) and leads them through a temperature-controlled cooling station (8), characterized in that, the detached waveguide element (7) is again heated, tempered at the heating temperature, and, finally, cooled to room temperature.

2. A method as claimed in Claim 1, characterized in that a loose synthetic resin envelope (6) is moulded around the fibre(s) (2) at an elevated temperature, the element is cooled and reeled, a predetermined initial position of the optical fibre(s) (2) relative to the envelope (6) being adjusted, after which the reeled waveguide element (7) is heated and subsequently tempered at the heating temperature and, finally, the element (7) is cooled, an accurate overlength of the optical fibre(s) (2) in the enveloppe being obtained as a result of shrinkage.

3. A method as claimed in Claim 1 or 2, characterized in that the heating temperature is a little lower than the softening temperature of the synthetic resin.

4. A method as claimed in Claim 1, 2 or 3, characterized in that the waveguide element (7) is reeled on a drum (9) which moves through a heating zone (13) in the axial direction.

5. A device for carrying out the method as claimed in Claim 4, comprising at least one storage reel (1) for an optical fibre (2), an extruder (3) for providing a synthetic resin envelope (6) around the fibre (2), a cooling bath (8) for cooling the enveloped optical fibre (2), a heating zone (13) and a drum (9) for reeling the waveguide element (7), characterized in that the drum (9) is arranged so as to be axially movable through the heating zone (13).

6. A device as claimed in Claim 5, characterized in that on its outside the drum (9) comprises a layer (14) of a compressible material.

7. A device as claimed in Claim 5 or 6, characterized in that layers (15) of compressible material are provided between the individual layers of the waveguide element (7) reeled on the drum (9).

**Revendications**

1. Procédé pour la réalisation d'un conducteur de guide d'ondes (7), selon lequel une enveloppe (6) en matière synthétique est projetée (extrudée) à une température augmentée autour d'une ou plusieurs fibres de guide d'ondes (2) et ensuite arrachée à l'aide d'un tambour (9) entraînant le conducteur de guide d'ondes (7) et la (les) fibre(s) de guide d'ondes à leur périphérie à travers un poste de refroidissement à température contrôlée (8), caractérisé en ce que le conducteur de guide d'ondes arraché (7) est à nouveau chauffé, trempé à la température de chauffage et ensuite refroidi à la température ambiante normale.

2. Procédé selon la revendication 1, caractérisé en ce qu'une enveloppe séparée (6) en matière synthétique est projetée autour de la fibre ou des fibres (2) à une température augmentée, le conducteur (7) est refroidi et enroulé, une position de départ préalablement choisie de la/des fibre(s) de guide d'ondes étant établie par rapport à l'enveloppe (6), puis, le conducteur de guide d'ondes enroulé (7) est chauffé et trempé à la température de chauffage et finalement, le conducteur (7) est refroidi de telle façon que, par suite du retrait qui se produit, une surlongueur précise de la ou des fibre(s) de guide d'ondes (2) s'obtienne dans l'enveloppe (6).

3. Procédé selon la revendication 1 ou 2, caractérisé en ce que la température de chauffage se situe tout juste au-dessous de la température de ramollissement de la matière synthétique.

4. Procédé selon la revendication 1, 2 ou 3, caractérisé en ce que le conducteur de guide d'ondes (7) est enroulé sur un tambour (9) traversant une chambre de chauffage (13) dans la direction axiale.

5. Dispositif pour la mise en oeuvre du procédé selon la revendication (4) muni d'au moins une bobine d'alimentation (1) pour une fibre de guide d'ondes (2), d'une extrudeuse (3) pour envelopper la fibre (2) d'une enveloppe (6) en matière synthétique, d'un bain de refroidissement (8) pour le refroidissement de la fibre de guide d'ondes enveloppée (3), d'une chambre de chauffage (13) ainsi que d'un tambour (9) pour enrouler le conducteur de guides d'onde (7), caractérisé en ce que le tambour est disposé de façon à pouvoir être déplacé dans la direction de l'axe du tambour (12) et à travers axialement la chambre de chauffage (13).

6. Dispositif selon la revendication 5, caractérisé en ce qu'à sa périphérie, le tambour (9) est muni d'une couche (14) en un matériau compressible.

7. Dispositif selon la revendication 5 ou 6, caractérisé en ce que des couches (15) en matériau compressible sont présentes entre les couches séparées du conducteur de guide d'ondes (7) enroulé sur le tambour (9).

FIG.1

FIG.2

FIG.3

1